# EUROPEAN PATENT SPECIFICATION

(11) **EP 0 769 117 B1**
(45) Date of publication and mention of the grant of the patent: **23.09.1998**
(21) Application number: 95924492.2
(22) Date of filing: 03.07.1995
(51) Int. Cl.: F17C 3/08, F16L 59/06, B65D 81/32

(54) **DEVICE FOR MAINTAINING VACUUM IN THERMALLY INSULATING JACKETS AND PROCESS FOR MANUFACTURING SUCH A DEVICE**
VORRICHTUNG ZUR AUFRECHTERHALTUNG EINES VAKUUMS IN THERMISCHEN ISOLIERTEN MÄNTELN UND HERSTELLUNGSVERFAHREN DAFÜR
DISPOSITIF SERVANT A MAINTENIR LE VIDE DANS DES ENVELOPPES D'ISOLATION THERMIQUE, ET SON PROCEDE DE FABRICATION

(30) Priority: 07.07.1994 IT MI941415
(43) Date of publication of application: 23.04.1997
(73) Proprietor: SAES GETTERS S.p.A., Lainate (Milano) (IT)
(72) Inventor: MANINI, Paolo, I-20010 Arluno (IT); BELLONI, Fortunato, I-20010 Villastanza di Parabiago (IT)
(74) Representative: Adorno, Silvano
(86) International application number: PCT/IT95/00110
(87) International publication number: WO 96/01966

(56) References cited:
- WO-A-95/16166
- GB-A- 1 198 600
- US-A- 5 191 980

## Description

The present invention relates to a device for maintaining vacuum in thermally insulating jackets and to a process for its manufacturing according to the claims.

In particular, the present invention is directed to a device suitable to be used in maintaining vacuum within thermally insulating, evacuated jackets, at the presence of insulating materials of various kind, as well as to the process for manufacturing said device.

Some typical examples of application of these jackets are the dewars for storing of cryogenic fluids, the pipings for their transportation, or the insulating panels for refrigerators.

Under the present practice it is known to use, for the thermal insulation, evacuated jackets containing insulating materials, such as glass wool, colloidal silica, perlite, or organic polymers in the form of foams (e.g. open cell-rigid polyurethans) or as multilayers.

It is further known that the vacuum generated in these jackets during their preparation has a tendency to degradation in the time as a consequence of phenomena of various type. For example there could be a release of gases and vapours, such as CO, CO₂, O₂, H₂, H₂O, N₂ or organic vapours from the insulating material employed or from the materials forming the walls of the jacket itself. The gases may enter the jacket by absorption, generally at the welding areas of the walls; finally, in case of walls made of plastics, a permeation of gases through the same walls is generally experienced, in particular of atmospheric gases.

This inconvenience is practically obviated by the adoption of one or more materials suitable to fix said gases. These materials are generally distinguished in physical and chemical sorbers.

The first ones act according to the principle of physical adsorption, namely by fixing the gases onto the surface thanks to attraction forces of not very high entity. This category comprises, among others, zeolites, molecular sieves, activated carbon, etc. ... However these physical adsorbers show the drawback of having a reversible sorption of gases, as they can release the same gases following an increase of temperature; consequently the physical sorbers are not fully suitable to the purposes of the thermal insulation.

Preferable, to this purpose, are the sorbing materials of chemical type, which sorb and fix gases irreversibly according to chemical reaction, such as the drying materials against the water vapour or the getter materials in case of gases like CO, CO₂, O₂, N₂, etc. or water vapour.

This solution is known in the art, and has been the object of several prior patents or patent applications, such as the international application WO 93/25843 in the name of the applicant.

That application discloses a process for using a combination of drier, chosen among barium oxide, strontium oxide, phosphorus oxide and their mixtures, and of a getter material formed of an alloy comprising barium and lithium, in particular an alloy of gross formula BaLi₄. The getter material alone could have the capacity of sorbing all the gases and vapours as previously indicated. However this material shows a great affinity with water vapour; thereby the drier is added to completely remove the water vapour from the mixture of gases coming into contact with the getter material, thus preserving the sorption capacity of the latter against the other gaseous species. Optionally, according to said application, it is possibile to introduce in the jacket also an oxide of a noble metal, preferably palladium oxide having the function of converting the traces of H₂ into H₂O, which is then fixed by the drier.

In the same application WO 93/25843 there is also indicated in quite general terms the possibility that the materials of the invention are placed at the inside of a container separately one from another by means of a porous septum, thus forming a device which can be used for the maintenance of vacuum.

However, the above-mentioned application does not take into account the practical problems which are met in preparing and using such a device and does not give a solution of these problems. The drying and getter materials of the mentioned international application show in fact a high reactivity towards gases and vapours already at room temperature, whereby they require a protection from the environment until the time of their use. According to said international application, the gas sorbing materials are present in an inactive status during the various preparation steps of the jacket and are activated by means of a thermal treatment at a temperature of less than 150°, when the jacket is already evacuated at a residual pressure of less than 5 Pa. However the activation thermal treatment may result incompatible with the jacket walls when these are made of plastic material. Furthermore the thermal treatment could give rise itself to gases being released from the materials present in the jacket.

U.S. Patent 5,191,980, assigned to the applicant, discloses a device in which the protection of the sorbing materials from the environment until the time of use is of a mechanical type. This device is formed as a container having at the inside thereof getter material hermetically sealed by a film of thermo-retractable material, such as vinyl chloride resin; the getter material in this case is exposed to the inner atmosphere of the jacket, when this is already closed, by means of a thermal treatment at a temperature of less than 150°, which causes retraction and rupture of the thermo-retractable film. Also in this case the thermal treatment which is necessary to film tearing may however be incompatible with the materials forming the jacket.

Therefore it is an object of the present invention that of providing a method for stabilization of vacuum at the inside of jackets, which is not affected by the inconveniences of the prior art.

In particular, it is an object of the present invention to provide a device for maintaining vacuum within thermally insulating jackets which does not require thermal activation once introduced in the jacket for its use and which can be exposed to air for some minutes without undergoing sensible alterations, thus greately semplifying the methods of production of the thermally insulating jackets.

Another object of the present invention is that of providing a process for manufacturing the vacuum maintaining device.

These and other objects are obtained according to the present invention, which in a first aspect thereof relates to a device for the maintenance of vacuum, comprised of:
- a container open and its upper side, made of a material impermeable to gases;
- a pellet obtained from powders of a Ba-Li getter alloy compressed at pressures comprised between about 30 and 1000 bar and placed in the lower portion of the container;
- a pellet obtained from powders of a drying material, possibly including also an oxide of a noble metal and a material preventing the drier from compacting, which is placed in the upper portion of the container so as to completely cover the pellet of getter material.

The formation of pellets from powders of Ba-Li getter alloys reduces the access speed with which the gas is admitted to the surface of the material grains with respect to the case of using loose powders. This causes a reduction in the sorption speed of the gases with respect to the powders.

The residual velocity is however more than sufficient to completely sorb the gases entering the jacket during its operation. This allows to open to air the package in which the device itself is taken before use; then the device can be introduced in the jacket before the evacuating process thereof. On the contrary the devices of the prior art required that the sorbing materials be exposed under vacuum, after closing the evacuated jacket or during the evacuation.

The getter material of the invention is, as stated above, a Ba-Li alloy. Particularly preferred is an alloy corresponding to the formula BaLi₄.

The pellet of getter material is prepared starting from powders of the corresponding material. The particle size of these powders may be comprised between 1 µm and 1 mm, and preferably between 50 and 750 µm. The drawback of an excessive reduction of the specific surface of the pellet material is experienced with a greater particle size, while with a lower size of particles the compaction of the powders is such as to reduce the sorption speed of the gases to values which are too low for practical uses.

The pressure adopted in the stage of preparation of the pellets depends on the particle size of the powder and must be at a minimum the pressure required to give the pellet a sufficient mechanical stability, not so high to occlude the inner porosity of the pellet, in order to avoid an excessive reduction of the sorption speed of gases. By employing powders with the particle size in the above-indicated ranges, the optimal values of the pressure adopted for the preparation of the pellets may vary between about 30 and 1000 bar and preferably between 150 and 600 bar.

The drier according to the invention is an oxide chosen among the oxides of strontium, phosphorus and, particularly preferred, barium.

Also the drying material is used in the form of a pellet obtained from powders having a particle size between 10 and 1000 µm. The pressure adopted for preparing the pellets is comprised between about 100 and 1000 bar. By operating in this range of pressures a compact pellet is obtained having however a conductivity of the gases other than water vapour, such as to ensure a sufficient sorption speed of these gases by the pellet of Ba-Li alloy.

To the drying material an oxide of a noble metal is preferably added, which is chosen among the oxides of silver, osmium, iridium, ruthenium, rhodium or palladium; preferred among these oxides is the palladium oxide. The function of this component is that of converting the hydrogen traces being in the jacket into water which is then sorbed by the drier, as described in the cited patent application WO 93/25843. The weight ratio between the drier and the noble metal oxide may vary between 5000:1 and 10:1, and preferably between 1000:1 and 100:1. The oxide of noble metal may be present in the form of loose powder or in a supported form. A method of preparation of an oxide of noble metal in supported form is described e.g. in the patent application PCT/IT 94/00016 in the applicant's name.

Advantageously, to the drier powder also a third material in powder is added, having the aim of preventing the drier from compaction, as it could occur as a consequence of the sorption of H₂O vapours. Such a third material may be e.g. alumina (Al₂O₃), zeolite or activated carbon; the use of zeolites or activated carbons may result to be convenient as these materials can sorb vapours, such as water vapour or vapours of organic components, thus contributing to maintain an evacuated atmosphere in the jackets. The weight ratio between the drier and the material preventing its compaction may vary between about 100:1 and 10:1.

The pellet of drying material, optionally containing also the oxide of a noble metal and the material preventing its compaction, may be merely obtained by compression of the mixture of powders. However, in a preferred embodiment, the pellet of drying material is prepared and employed by including the same between two discs of a material allowing an easy passage of gas, such as a screen, a gauze or a fabric, being made e.g. of a metal wire or of a polymeric material like polyethylene. These discs have the purpose of retaining possible fragments which could be detached from the pellet during its formation, or even at a subsequent stage, when the device is working, due to swelling zones caused by water sorption. Both discs can be simply fixed on to both the circular surfaces of the pellet during its preparation by introducing in a press a first disc, the mixture of powders and the second disc in this order and by compressing the whole at a pressure as above indicated: thus the two discs, being net-shaped, risult to be embedded in the two surfaces of the pellet.

The container for gas sorbing materials can be made of whichever material, provided it is impermeable to gases. Suitable materials may be e.g. metals or composite materials formed of plastic sheets coated with metal or multilayers of plastic/metal. Due to their working easiness the metals are preferred, such as stainless steel or aluminum; particularly preferred is aluminum which is light, easily formable in sheets and cold-drawable. A suitable thickness for a container in aluminum could be comprised between about 0.1 and 0.3 mm. The container may be of any shape allowing to accomplish the condition that the Ba-Li alloy pellet is completely covered with the drying material pellet. With finished device, the upper edge of the container is deformed to ensure a stable retention of the pellets.

As a consequence of its features, the device of the invention can bear exposure to air for about 15 min without becoming degraded to such a degree to impair its performances.

For a better comprehension of the constructional details of the devices according to the invention and their operative features, reference will be made to the annexed drawings, given by non-limiting example of the invention, wherein:
Figure 1 is a perspective view of a cross-section of a possible device according to the invention;
Figure 2 is a cross-section view of a device according to a possible alternative embodiment of the invention;
Figure 3 shows in graphic form the results of the test of example 1; in the graph there are plotted the values of sorption speeds (G) of nitrogen in cc/s in function of the quantity (Q) of nitrogen sorbed in cc.torr for each gram of alloy before and after exposure of the device to air for 15 minutes.

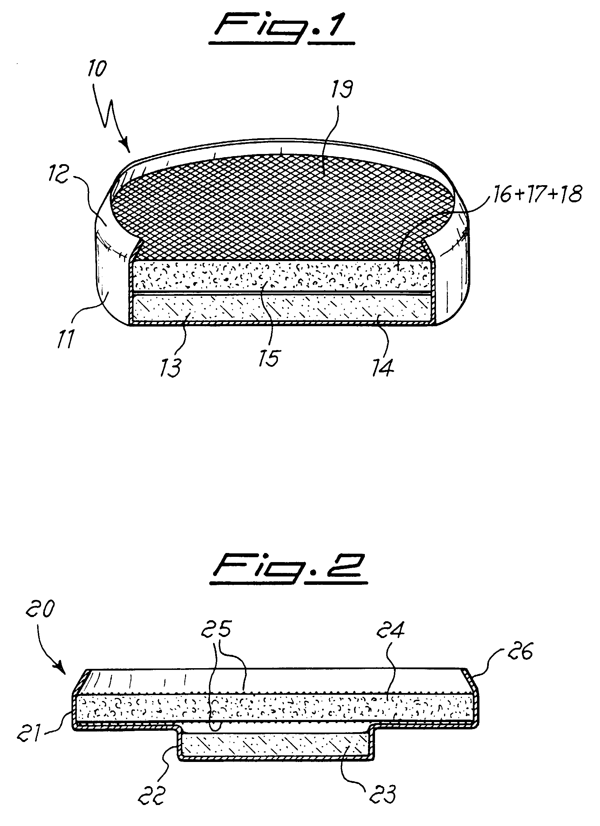

With reference to the drawing of Fig. 1, the device 10 for maintaining vacuum according to the invention is comprised of a container 11 in the lower portion of which there is a pellet 13 of Ba-Li alloy (14) and in the upper portion of which there is a pellet 15 being formed of drying material 16, e.g. BaO, of an oxide of noble metal 17, e.g. PdO, and of a material 18 useful to avoid compaction of the drier. The pellet 15 is enclosed in a net 19 of polymeric material. The upper edge 12 of the container 11 is bent to the inside thus keeping the pellets at the desired position.

In Fig. 2 there is shown in cross-section a possible alternative embodiment of a device according to the invention, in which the two pellets of getter material and drier have a different diameter. In the drawing a device 20 is seen, comprising a container 21 that shows a recess 22 on its bottom. The recess 22 houses a pellet 23 of Ba-Li alloy; a pellet 24 obtained by compressing together the drier, the oxide of noble metal and alumina is then placed in the upper zone of container 21. Pellet 24 is held between two discs of a polymeric material net 25. Also in this case the upper edge 26 of container 21 is bent toward the inside to keep in position the pellets.

In dimensioning the device of the invention for maintenance of vacuum, the size of the jacket wherein the device itself is to be used should be taken into account, as well as the material forming the walls of the jacket and the insulating materials contained therein. In typical applications, such as the insulating panels for refrigerators, the pellet of drying material also comprising the oxide of noble metal and the material preventing from compaction can weigh between about 1 and 5 g, while the pellet of Ba-Li alloy may have generally a weight between about 0.2 and 1.5 g.

According to a second aspect thereof the present invention relates to a process for the production of devices for maintaining vacuum according to the invention.

The process of the invention comprises the following steps:
- forming a container for compressed powders, being open at the upper side and higher than the height of both pellets added to each other;
- placing on the bottom of the container a pellet of powders of a Ba-Li alloy;
- introducing into the container a pellet of drying material to which an oxide of a noble metal may be optionally added, over the pellet of Ba-Li alloy in such a way that the Ba-Li alloy pellet is completely covered with the pellet of drying material;
- deforming the upper edge of the container thus keeping at their position the pellets contained therein.

The material used for the container can be wichever material being cold-drawable. As stated above the preferred material to this aim is aluminum which is light, easily formable by cold-drawing and impermeable to gases.

The shape of the container, although not critical for operation of the device, is generally with a circular base.

The container can be simply cylindrical, in cross-section, as shown in Fig. 1 or can comprise two coaxial cylinders, as shown in Fig. 2, or have other similar shapes.

The pellet of Ba-Li getter alloy can be prepared separately and introduced into the container. In a preferred embodiment however the pellet is formed locally in the lower portion of the container, by introducing a suitable quantity of powdered alloy and then compressing it through application of a pressure in the range between 30 and 1000 bar, preferably between 150 and 600 bar. This possibility is shown in Fig. 2, wherein the pellet 23 of getter material is not shown as a separate portion of the device.

The pellet of drying material, as previously described, is instead prepared separately and then introduced in the upper portion of the container.

As stated before the pellet of drying material is preferably held between two discs of a net, gauze or fabric of a material such as polyethylene having the purpose of preventing the release of pellet fragments following possible swellings as a consequence of water absorption.

In the last step of the process the upper edge of the container is deformed, such as by bending to the inside, as shown in Figs. 1 and 2, thus forming a retention member keeping the two pellets in the desired configuration.

Objects and advantages of the present invention will result more clearly apparent to those skilled in the art from the following example, the purpose of which is merely of illustrative character, thus non limiting the scope of the invention.

### EXAMPLE 1

A container for pellets of both getter and drying materials is prepared by forming through cold drawing a disc of aluminum sheet having a thickness of 0.2 mm. A container of cylindrical shape is obtained like in Fig. 1, 4 mm high and with an inner diameter of 20 mm. 0.5 g of powder of an alloy having the gross formula of BaLi₄, with a particle size between 50 and 750 µm are placed on the bottom of the container prepared according to the above. The powder is compressed onto the container bottom by a piston of the same diameter of the container at a pressure of 500 bar. The compressed powder reaches in the container a height of about 1 mm. A pellet of a mixture of powders is separately prepared by compression at 800 bar and formed of 2 g of BaO having a particle size between 100 and 300 µm and 5 mg of PdO on a support of 0.1 g of alumina. This pellet is prepared between two discs of polyethylene fabric. The obtained pellet, having a diameter equal to the inner diameter of the container and about 2 mm high is inserted in the container itself wherein the pellet of BaLi₄ is already present. Finally the upper edge is slightly bent to the inside for keeping the pellets in position.

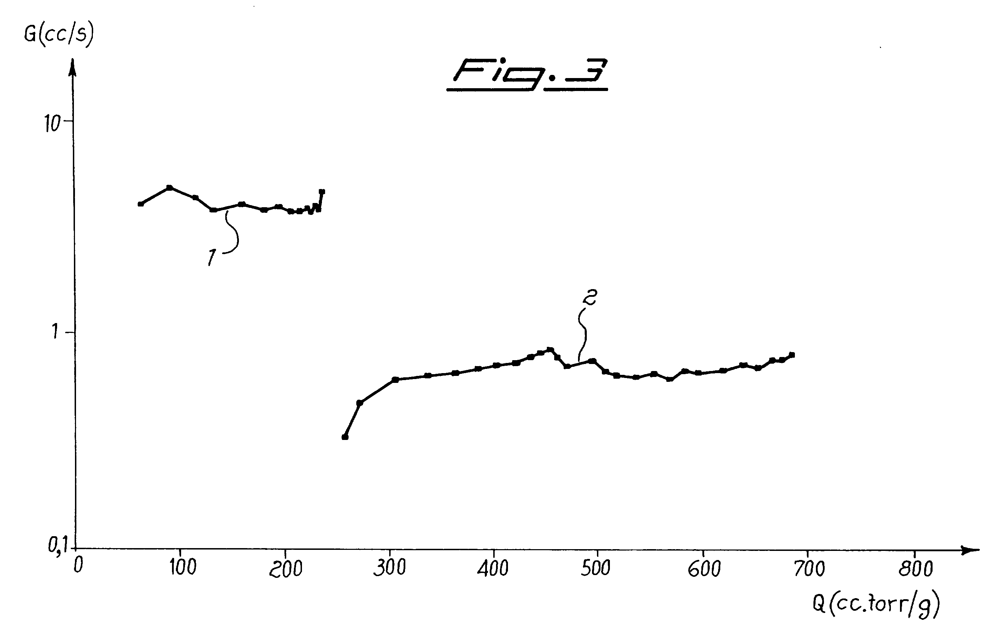

The device, being so prepared, is placed in a chamber for measuring the gas sorption, wherein the rate at which the gas is sorbed (G) is measured as a function of the quantity of sorbed gas (Q) before and after exposure to air for 15 minutes. The measure is carried out by batches of nitrogen introduced in succession in the chamber, each having a volume of 800 cc, until a pressure of 0.27 mbar in the chamber at each batch of nitrogen, then recording the pressure decrease in the chamber, due to the sorption of the device. The measure is taken initially on the device as prepared; then it is interrupted, the device is exposed to air for 15 minutes and then introduced again in the measuring chamber. The graph of Fig. 3 shows the sorption curves before exposure to air (curve 1) and after the exposure (curve 2).

As seen from Fig. 3, the device of the invention keeps, upon exposure to air for 15 minutes, a nitrogen sorption rate of about 1 cc/s. In a typical application, such a device can be employed in the panels for thermal insulation of refrigerators. A panel having a size of 50 x 50 x 3 cm³, made in rigid polyuretane with open cells, having a housing of aluminium/polyethylene multilayer, wherein the permeation takes place exclusively in the zone of welding on polyethylene, shows a permeation of about 10⁻⁴ mbar.cc/s; a panel like this maintains its insulating characteristics until when the inner pressure exceeds a value of about 0.1 mbar. Consequently it is necessary that the device has a higher sorption rate at about 10⁻³ cc/s. The device of the invention, upon exposure to air, is therefore provided with a sorption speed that is 1000 times higher than the gas inflow rate in a typical panel.

## Claims

1. A device for the maintenance of vacuum, comprising a container (11; 21) with open upper portion, made of a material impermeable to gases, characterized by the fact of further comprising a first pellet (13; 23) formed of powders of a Ba-Li getter alloy (14) compressed at pressures comprised between about 30 and 1000 bar and placed in the lower portion of the container and a second pellet (15; 24) formed of powders of a drying material (16), placed in the upper portion of the container (11; 21), whereby the first pellet (13; 23) of getter material is completely covered.

2. A device according to claim 1, wherein the getter material (14) has a particle size in the range from 1 to 1000 µm.

3. A device according to claim 1, wherein said first pellet (13; 23) is formed of powders of a Ba-Li getter alloy (14) compressed at pressures comprised between 150 and 600 bar.

4. A device according to claim 1, wherein the getter material (14) is an alloy of gross formula BaLi₄.

5. A device according to claim 1, wherein the drying material (16) is chosen among barium oxide, strontium oxide and phosphorus oxide.

6. A device according to claim 1, wherein the drying material (16) has a particle size of between 10 and 1000 µm.

7. A device according to claim 6, wherein the drying material (16) is barium oxide.

8. A device according to claim 1, wherein said second pellet (15; 24) of drying material (16) includes an oxide of a noble metal (17) chosen among the oxides of silver, osmium, iridium, ruthenium, rhodium or palladium, wherein the ratio by weight between the drying material (16) and the oxide of noble metal (17) is comprised in the range between 5000:1 and 10:1.

9. A device according to claim 8, wherein the ratio by weight between the drying material (16) and the oxide of the noble metal (17) is comprised between 1000:1 and 100:1.

10. A device according to claim 8, wherein the second pellet (15; 24) of drying material includes also powder of a material (18) preventing from compaction the drying material (16) powder.

11. A device according to one of the claims 1, 8 or 10, wherein said second pellet (15; 24) is placed between two discs of a net, gauze or fabric of metallic o polymeric material (19; 25).

12. A device according to claim 1, wherein the container (11; 21) is made of a material impermeable to gases chosen among metals, composite materials formed of sheets of plastic material coated with metal or

13. A device according to claim 12, wherein the container is made of aluminum having a thickness of from 0.1 to 0.3 mm.

14. A process for manufacturing a device for the maintenance of vacuum comprising the following steps:
- forming a container for the compressed powders, open at the upper side and higher than the total height of the pellet added to each other;
- placing on the bottom of the container a pellet of powders of a Ba-Li alloy upon compression at pressures between about 30 and 1000 bar ;
- introducing in the container a pellet of a drying material to which an oxide of a noble metal can be optionally added as well as a material avoiding the drier compaction, at an upper position with respect to the Ba-Li alloy pellet such as the Ba-Li alloy pellet is completely covered by the pellet of drying material;
- deforming the upper edge of the container in order to keep at their position the pellets contained therein.

15. A process according to claim 14 wherein the Ba-Li alloy pellet is formed locally by compressing powders of said alloy at the inside of the container.

16. A process according to claim 14 or 15 wherein the compression of the powders of said alloy is carried out at pressures between 150 and 600 bar.

## Patentansprüche

1. Vorrichtung zur Aufrechterhaltung eines Vakuums, umfassend einen aus einem gasundurchlässigen Material hergestellten Behälter (11; 21) mit einem offenen oberen Abschnitt, dadurch gekennzeichnet, daß sie desweiteren eine in den unteren Abschnitt des Behälters eingelegte erste Tablette (13; 23) aufweist, die aus Pulvern einer bei Drücken zwischen etwa 30 und 1000 bar gepreßten Ba-Li-Getterlegierung (14) gebildet ist, und eine in den oberen Abschnitt des Behälters (11; 21) eingelegte zweite Tablette (15; 24) aufweist, die aus Pulvern eines Trocknungsmaterials (16) gebildet ist, durch welche die aus Gettermaterial bestehende erste Tablette (13; 23) vollständig abgedeckt ist.

2. Vorrichtung nach Anspruch 1, wobei das Gettermaterial (14) eine Teilchengröße im Bereich von 1 bis 1000 µm aufweist.

3. Vorrichtung nach Anspruch 1, wobei die erste Tablette (13; 23) aus Pulvern einer bei Drücken zwischen etwa 150 und 600 bar gepreßten Ba-Li-Getterlegierung (14) gebildet ist.

4. Vorrichtung nach Anspruch 1, wobei das Gettermaterial (14) eine Legierung der allgemeinen Formel BaLi₄ ist.

5. Vorrichtung nach Anspruch 1, wobei das Trocknungsmaterial (16) unter Barium-Oxid, Strontium-Oxid und Phosphor-Oxid ausgewählt ist.

6. Vorrichtung nach Anspruch 1, wobei das Trocknungsmaterial (16) eine Teilchengröße im Bereich von 10 bis 1000 µm aufweist.

7. Vorrichtung nach Anspruch 6, wobei das Trocknungsmaterial (16) Barium-Oxid ist.

8. Vorrichtung nach Anspruch 1, wobei die aus Trockungsmaterial (16) bestehende zweite Tablette (15; 24) ein Oxid eines Edelmetalls (17) enthält, das unter den Oxiden des Silbers, Osmiums, Iridiums, Rutheniums, Rhodiums oder Palladiums ausgewählt ist, wobei das Gewichtsverhältnis zwischen dem Trockungsmaterial (16) und dem Oxid des Edelmetalls (17) im Bereich von 5000:1 und 10:1 enthalten ist.

9. Vorrichtung nach Anspruch 8, wobei das Gewichtsverhältnis zwischen dem Trockungsmaterial (16) und dem Oxid des Edelmetalls (17) im Bereich von 1000:1 und 100:1 enthalten ist.

10. Vorrichtung nach Anspruch 8, wobei die aus Trockungsmaterial (16) bestehende zweite Tablette (15; 24) auch Pulver eines Materials (18) enthält, das eine Verdichtung des Trockungsmaterialpulvers (16) verhindert.

11. Vorrichtung nach Anspruch 8 oder 10, wobei die zweite Tablette (15; 24) zwischen zwei Scheiben aus einem Netz, einer Gaze oder einem Gewebe aus metallischem Material oder Polymermaterial (19; 25) gelegt ist.

12. Vorrichtung nach Anspruch 1, wobei der Behälter (11; 21) aus einem gasundurchlässigen Material hergestellt ist, das unter Metallen oder Verbundmaterialien, die aus mit Metall oder Kunststoff-Metall-Mehrfachschichten beschichteten Kunststoffplatten gebildet sind, gewählt ist.

13. Vorrichtung nach Anspruch 12, wobei der Behälter (11; 21) aus Aluminium mit einer Stärke von 0,1 bis 0,3 mm hergestellt ist.

14. Verfahren zur Herstellung einer Vorrichtung zur Aufrechterhaltung eines Vakuums, das folgende Schritte umfaßt:
Formen eines Behälters für die zusammengepreßten Pulver, der an der oberen Seite offen und höher ist als die Gesamthöhe der zusammengefügten Tabletten,
nach Zusammenpressen bei Drücken zwischen etwa 30 und 1000 bar, Einlegen einer Tablette aus Pulvern einer Ba-Li-Legierung auf den Boden des Behälters,
Einführen einer Tablette aus einem Trockungsmaterial, welchem optional ein Oxid eines Edelmetalls sowie ein Material, das die Trockungsverdichtung verhindert, hinzugegeben werden können, in den Behälter an einer oberen Position in bezug auf die Ba-Li-Legierungstablette derart, daß die Ba-Li-Legierungstablette vollständig durch die Tablette aus Trockungsmaterial abgedeckt ist, und
Verformen der oberen Kante des Behälters, um die darin enthaltenen Tabletten in ihrer Position zu halten.

15. Verfahren nach Anspruch 14, wobei die Ba-Li-Legierungstablette örtlich durch Zusammenpressen der Legierungspulver an der Innenseite des Behälters gebildet wird.

16. Verfahren nach Anspruch 14 oder 15, wobei das Zusammenpressen der Legierungspulver bei Drücken zwischen 150 und 600 bar ausgeführt wird.

## Revendications

1. Un dispositif servant à maintenir le vide, comprenant un récipient (11; 21) à partie supérieure ouverte, réalisé en une matière imperméable aux gaz, caractérisé par le fait de comprendre en outre une première pastille (13 ; 23) formée de poudres d'un alliage de dégazage Ba-Li (14) comprimé à des pressions comprises entre environ 30 et 1000 bars et placée dans la partie inférieure du récipient et une seconde pastille (15 ; 24) formée de poudres d'une matière déshydratante (16), placée dans la partie supérieure du récipient (11 ; 21), de sorte que la première pastille (13 ; 23) de matière de dégazage est complètement recouverte.

2. Un dispositif selon la revendication 1, dans lequel la matière de dégazage (14) présente une granulométrie dans la gamme de 1 à 1000 µm.

3. Un dispositif selon la revendication 1, dans lequel ladite première pastille (13 ; 23) est formée de poudres d'un alliage de dégazage Ba-Li (14) comprimé à des pressions comprises entre 150 et 600 bars.

4. Un dispositif selon la revendication 1, dans lequel la matière de dégazage (14) est un alliage de formule brute BaLi₄.

5. Un dispositif selon la revendication 1, dans lequel la matière déshydratante (16) est choisie parmi l'oxyde de baryum, l'oxyde de strontium et l'oxyde de phosphore.

6. Un dispositif selon la revendication 1, dans lequel la matière déshydratante (16) présente une granulométrie entre 10 et 1000 µm.

7. Un dispositif selon la revendication 6, dans lequel la matière déshydratante (16) est l'oxyde de baryum.

8. Un dispositif selon la revendication 1, dans lequel ladite seconde pastille (15 ; 24) de matière déshydratante (16) comprend un oxyde d'un métal noble (17) choisi parmi les oxydes d'argent, d'osmium, d'iridium, de ruthénium, de rhodium ou de palladium, où le rapport pondéral entre la matière déshydratante (16) et l'oxyde de métal noble (17) est compris dans la gamme de 5000:1 à 10:1.

9. Un dispositif selon la revendication 8, dans lequel le rapport pondéral entre la matière déshydratante (16) et l'oxyde de métal noble (17) est compris entre 1000:1 et 100:1.

10. Un dispositif selon la revendication 8, dans lequel la seconde pastille (15 ; 24) de matière déshydratante comprend également une poudre d'une matière (18) empêchant le compactage de la poudre de matière déshydratante (16).

11. Un dispositif selon une des revendications 1, 8 ou 10, dans lequel ladite seconde pastille (15 ; 24) est piacée entre deux disques d'un filet, d'une gaze ou d'un tissu de matière métallique ou polymère (19 ; 24).

12. Un dispositif selon la revendication 1, dans lequel le récipient (11 ; 21) est réalisé en une matière imperméable aux gaz choisie parmi les métaux, les matières composites formées de feuilles de matières plastiques recouvertes de métal ou de multicouches de matière plastique/métal.

13. Un dispositif selon la revendication 12, dans lequel le récipient est réalisé en aluminium présentant une épaisseur de 0,1 à 0,3 mm.

14. Un procédé pour la fabrication d'un dispositif servant à maintenir le vide comprenant les opérations suivantes :
- former un récipient pour les poudres comprimées, ouvert au niveau du côté supérieur et plus élevé que la hauteur totale des pastilles ajoutées l'une à l'autre ;
- placer sur le fond du récipient une pastille de poudres d'un alliage Ba-Li lors d'une compression à des pressions entre environ 30 et 1000 bars ;
- introduire dans le récipient une pastille d'une matière déshydratante à laquelle peut être facultativement ajouté un oxyde d'un métal noble ainsi qu'une matière évitant le compactage du déshydrateur, au niveau d'une position supérieure par rapport à la pastille d'alliage Ba-Li telle que la pastille d'alliage Ba-Li soit complètement recouverte par la pastille de matière déshydratante ;
- déformer le bord supérieur du récipient de manière à maintenir à leur place les pastilles contenues à l'intérieur.

15. Un procédé selon la revendication 14, dans lequel la pastille d'alliage Ba-Li est formée localement par compression de poudres dudit alliage à l'intérieur du récipient.

16. Un procédé selon la revendication 14 ou 15, dans lequel la compression des poudres dudit alliage est effectuée à des pressions entre 150 et 600 bars.
